# EUROPÄISCHE PATENTSCHRIFT

(11) **EP 3 977 081 B1**
(45) Veröffentlichungstag und Bekanntmachung des Hinweises auf die Patenterteilung: **25.09.2024**
(21) Anmeldenummer: 20732748.7
(22) Anmeldetag: 26.05.2020
(51) Int. Cl.: G01L 1/20, G01L 5/22, G06F 3/041, G06F 3/044

(54) **TAKTILES SENSORELEMENT**
TACTILE SENSOR ELEMENT
ÉLÉMENT DE CAPTEUR TACTILE

(30) Priorität: 27.05.2019 DE 102019114185
(43) Veröffentlichungstag der Anmeldung: 06.04.2022
(73) Patentinhaber: Tacterion GmbH, 80335 München (DE)
(72) Erfinder: STROHMAYR, Michael, Wolfgang, 86159 Augsburg (DE); ABDELLAH, Alaa, 81476 München (DE)
(74) Vertreter: Rösler Rasch van der Heide & Partner
(86) Internationale Anmeldenummer: PCT/EP2020/064562
(87) Internationale Veröffentlichungsnummer: WO 2020/239758

(56) Entgegenhaltungen:
- GB-A- 2 343 516
- US-A1- 2010 077 868
- US-A1- 2019 113 410

## Beschreibung

Die Erfindung betrifft ein taktiles Sensorelement sowie einen taktilen Sensor mit einem ebensolchen taktieren Sensorelement.

Gattungsgemäße taktile Sensorelemente sind im Stand der Technik bspw. aus den Dokumenten US 2019/113410 A1, GB 2 343 516 A und US 2010/077868 A1 bekannt.

Die Aufgabe der Erfindung ist es, ein verbessertes robustes und vielfältig einsetzbares taktiles Sensorelement sowie einen taktilen Sensor mit einem solchen Sensorelement anzugeben, das zudem einfach herstellbar ist.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekte Erfindung betrifft ein taktiles Sensorelement aufweisend: eine Substratschicht aus einem elektrisch nichtleitenden Material M1; eine auf einer Oberseite der Substratschicht aufgebrachte erste Elektrodenschicht ES1 und eine auf die Oberseite der Substratschicht aufgebrachte zweite Elektrodenschicht ES2, wobei die erste und die zweite Elektrodenschicht ES1, ES2 aus einem elektrisch leitenden Material M2 bestehen; auf der Oberseite lateral voneinander beabstandet angeordnet sind und jeweils eine 2D-Form aufweisen, die derart gestaltet ist, dass sich Teilbereiche der Elektrodenschicht ES1 und Teilbereiche der Elektrodenschicht ES2 zumindest in einem Bereich B an der Oberseite entlang einer Richtung R0 aufeinanderfolgend mehrfach abwechseln; eine auf die Substratschicht und auf die darauf aufgebrachten Elektrodenschichten ES1 und ES2 aufgebrachte Abstandshalterschicht, wobei die Abstandshalterschicht zumindest in dem Bereich B aus einzelnen (vorteilhaft parallel) in einer Richtung R1 verlaufenden, jeweils voneinander beabstandeten (vorteilhaft geraden) Strängen ST aus einem im Wesentlichen elektrisch nichtleitenden Material M3 oder aus einem Lochgitter aus einem im Wesentlichen elektrisch nichtleitenden Material M3 mit parallel zur Oberseite verlaufenden Gitterachsen G1, G2 besteht; und eine auf die Abstandshalterschicht (vorteilhaft flächig geschlossen) aufgebrachte Messschicht aus einem elektrisch leitenden, elastischen und dehnbaren Material M4.

Die Formulierung "im Wesentlichen elektrisch nichtleitend" charakterisiert vorliegend Materialien, die einen sehr hohen / hohen elektrischen Widerstand aufweisen und daher in der technischen Praxis üblicherweise als "elektrisches Isolatormaterial" bzw. "elektrische Isolatoren" bezeichnet werden.

Das vorgeschlagene taktile Sensorelement umfasst somit grundsätzlich die vier direkt übereinander angeordneten Schichten: Substratschicht (unterste Schicht, erste Schicht), darauf in einer Ebene lateral versetzt aufgebrachte Elektrodenschichten ES1 und ES2 (zweite Schicht), darauf aufgebrachte Abstandshalterschicht (dritte Schicht) sowie auf die Abstandshalterschicht aufgebrachte Messschicht (oberste Schicht, vierte Schicht des taktilen Sensorelementes).

Vorteilhaft ist auf die Messschicht eine weitere, fünfte Schicht (Schutzschicht) aufgebracht, die eine Schutzfunktion erfüllt. Die Schutzschicht ist aus einem elektrisch nichtleitenden Material M5 gefertigt. Vorteilhaft besteht die Schutzschicht aus einem Elastomermaterial.

Vorteilhaft ist das Material M1 Polyethylen, insbesondere Polyethylenterephthalat PET. Dies wird vorteilhaft für Anwendungen gewählt, bei dem das Sensorelement insgesamt flexible und biegbare Materialeigenschaften aufweisen soll, aber nicht dehnbar sein soll.

Soll hingegen das Sensorelement insgesamt elastische Materialeigenschaften aufweisen, d.h. leicht dehnbar sein, so wird für das Material M1 vorteilhaft ein Elastomer, insbesondere Silikon verwendet.

Das Material M2 ist bevorzugt Silber oder einer Silberlegierung. Alternativ kann das Material M2 Gold oder eine Goldlegierung oder Kupfer oder eine Kupferlegierung sein. In einer vorteilhaften Weiterbildung ist das Material M2 ein elektrisch leitfähiger elastisch verformbarer Kunststoff oder ein Elastomer.

Das Material M3 ist bevorzugt ein dielektrisches Material, d.h. insbesondere in Praxis "elektrisch nicht leitend".

Das Material M4 ist bevorzugt ein Elastomermaterial.

Eine vorteilhafte Weiterbildung des vorgeschlagenen Sensorelements zeichnet sich dadurch aus, dass alle Materialien: M1, M2, M3, M4 und M5 (sofern vorhanden) dehnbar und elastisch verformbar sind. Eine derartige Ausführungsform des Sensorelements eignet sich insbesondere zur Aufbringung/Anbringung auf unebenen Oberflächen.

Eine vorteilhafte Ausführungsformen des vorgeschlagenen Sensorelements zeichnet sich dadurch aus, dass die sich im Bereich B entlang der Richtung R0 abwechselnden Teilbereiche der Elektrodenschichten ES1 und ES2 jeweils als Fortsätze bspw. als balkenartige Fortsätze oder zackenartige Fortsätze ausgebildet sind, wobei die Fortsätze der Elektrodenschichten ES1 und ES2 kammartig ineinandergreifen. Der Bereich B ist der Bereich, in dem taktile Eingaben, d.h. die Annäherung von Objekten an das vorgeschlagene Sensorelement, in einem kapazitiven Auswertemodus, sowie tatsächlich ausgeübte Kräfte auf das Sensorelement erfasst werden können.

Das vorgeschlagene Sensorelement ist vorteilhaft derart gestaltet, dass der Bereich B den größten Teil der Sensoroberfläche des Sensorelements (bspw. > 80 % der Oberfläche des Sensorelements) darstellt.

Vorteilhaft weisen die in Richtung R0 aufeinanderfolgend angeordneten Teilbereiche der Elektrodenschichten ES1 und ES2 auf der Oberfläche der Substratschicht jeweils einen Abstand aus dem Bereich [0.01 mm, 5.0 mm] voneinander auf.

Vorteilhaft weisen die in Richtung R0 aufeinanderfolgend angeordneten Teilbereiche der Elektrodenschichten ES1 und ES2 auf der Oberfläche der Substratschicht jeweils eine Längserstreckung in RO-Richtung aus dem Bereich [0.01 mm, 5.0 mm] aufweisen. Mit anderen Worten wird dadurch die jeweilige Breite der Teilbereiche der sich in RO-Richtung abwechselnden Elektrodenschichten ES1 und ES2 angegeben.

Erfindungsgemäß schließen die Richtung R1 und die Richtung R0 einen Winkel α aus dem Winkelbereich [30° - 60°] ein. Bevorzugt schließen die Richtung R1 und die Richtung R0 einen Winkel α = 45° ein.

Erfindungsgemäß schließen die Richtung R0 und eine der Gitterachsen G1, G2 einen Winkel α aus dem Winkelbereich [30° - 60°] ein. Bevorzugt schließen die Richtung R0 und eine der Gitterachsen G1, G2 einen Winkel α = 45 ° ein.

In einer bevorzugten Ausführungsform sind die Teilbereiche (Stränge ST) der Elektrodenschichten ES1 und ES2 derart geformt, dass sie jeweils kammzinkenartige Fortsätze, die bspw. balkenförmig oder zinkenförmig geformt sind, und die parallel zueinander, ineinandergreifend ohne sich zu berühren auf der Substratschicht angeordnet sind, analog zweier Kämme, deren Zinken jeweils in die Zwischenräume der Zinken des jeweils gegenüberliegenden Kamms eingreift ohne sich jedoch zu berühren.

Eine vorteilhafte Weiterbildung des vorgeschlagenen Sensorelements zeichnet sich dadurch aus, dass die Stränge ST der Teilbereiche der Elektrodenschichten ES1 und ES2 in dem Bereich B jeweils einen konstanten Abstand voneinander aufweisen. Die Sensorcharakteristik (beispielsweise Sensorauflösung) ist dadurch auf dem Bereich B konstant.

Je nach Anforderungsanwendung kann es erforderlich sein, die Sensorcharakteristik über den Bereich B zu variieren. Eine derartige Ausgestaltung des vorgeschlagenen Sensorelements zeichnet sich dadurch aus, dass die Stränge ST der Teilbereiche der Elektrodenschichten ES1 und ES2in dem Bereich B jeweils einen variierenden Abstand D voneinander aufweisen. Alternativ oder zusätzlich wird vorteilhaft die jeweilige Breite der Teilbereiche der sich in RO-Richtung abwechselnden Elektrodenschichten ES1 und ES2 über den Bereich B variiert. Auch dies führt zu einer über den Bereich B variierenden Sensorcharakteristik.

Eine vorteilhafte Weiterbildung des vorgeschlagenen Sensorelements zeichnet sich dadurch aus, dass die Elektrodenschicht ES1 als eine Vielzahl voneinander beabstandeter miteinander elektrisch verbundener konzentrischer Ringsegmente RES1 und die Elektrodenschicht ES2 als eine Vielzahl voneinander beabstandeter miteinander elektrisch verbundener konzentrischer Ringsegmente RES2 ausgebildet sind, wobei die Ringsegmente RES1 und RES2 in Richtung R0 abwechselnd angeordnet sind. Im Unterschied zu den parallel verlaufenden Strängen ST der vorstehend beschriebenen Weiterbildung, sind die Stränge in dieser Weiterbildung kreisförmig, d.h. als Kreissegmente oder vollständig geschlossene Ringssegmente ausgebildet. Dabei wechseln sich Ringsegmente der ersten Elektrodenschicht ES1 mit Ringsegmenten der zweiten Elektrodenschicht ES2 entlang der Richtung R0 ab.

Die in Richtung R0 abwechselnd aufeinanderfolgenden Teilbereiche der Elektrodenschichten ES1 und ES2 im Bereich B können allgemein grundsätzlich beliebig geformt sein.

Vorteilhaft sind die Abstandhalterschicht und die Messschicht derart ausgeführt und eingerichtet, dass bei Aufbringen einer Kraft auf die Messschicht, die Messschicht durch elastische Verformung die zwischen den Strängen ST verlaufenden oder unterhalb der Löcher des Lochgitters verlaufenden Elektrodenschichten ES1 und ES2 elektrisch kontaktiert. Die Messschicht weist hierzu entsprechende elastische Eigenschaften auf, derart dass durch einbringen einer Kraft einerseits die menschlich derart elastisch verformt wird, dass sie in der Lage ist die Teilbereiche der Elektrodenschicht ES1 und ES2 elektrisch zu kontaktieren und nach Beendigung des Krafteintrages wieder in die Ursprungslage zurückzukehren. Die Abstandshalterschicht ist hingegen ausreichend steif ausgeführt, so dass bei einem nicht vorhandenen Krafteintrag auf die Messschicht, d.h. in unbelasteten Zustand der Messschicht, zwischen der Messschicht und den in den Zwischenräumen der Abstandshalterschicht angeordneten Teilbereichen der Elektrodenschichten ES1 und ES2 ein hinreichender Abstand erzeugt wird.

Das Kontaktieren der jeweiligen Teilbereiche der Elektrodenschichten ES1 und ES2 führt lokal zu einer elektrischen Verbindung zwischen der Elektrodenschicht ES1 und der Elektrodenschicht ES2 über die lokale Messschicht. Werden die Elektrodenschicht ES1 und ES2 jeweils mit einer Spannungsquelle oder einer Stromquelle verbunden, so kann dadurch ein Stromfluss gemessen werden, der einen entsprechenden taktilen Krafteintrag in das Sensorelement anzeigt.

Vorteilhaft sind die Teilbereiche der Elektrodenschicht ES1 und ES2 sowie die darauf angebrachte Abstandshalterschicht derart aufeinander abgestimmt, dass in den Zwischenräumen der Abstandshalterschicht zumindest zwei Teilbereiche der Elektrodenschicht ES1 und ES2 verlaufen, sodass diese durch Niederdrücken der Messschicht elektrisch miteinander kontaktiert werden können.

Eine vorteilhafte Weiterbildung des vorgeschlagenen Sensorelements zeichnet sich dadurch aus, dass die Messschicht auf ihrer der Abstandhalterschicht zugewandten Seite eine ebene Oberfläche aufweist.

Eine besonders vorteilhafte Weiterbildung des vorgeschlagenen Sensorelements zeichnet sich dadurch aus, dass die Messschicht auf ihrer der Abstandhalterschicht zugewandten Seite eine Oberflächenstrukturierung aufweist. Die Oberflächenstrukturierung ist vorteilhaft aus demselben Material wie die Messschicht selbst. Vorteilhaft ist die Oberflächenstrukturierung dadurch gekennzeichnet, dass sie parallel angeordnete gerade verlaufende Erhebungen aufweist. Vorteilhaft weisen nebeneinander angeordnete Erhebungen der Messschicht abwechselnd einen rechteckigen und einen dreieckigen Querschnitt auf. Vorteilhaft weisen nebeneinander angeordnete Erhebungen jeweils eine unterschiedliche Erhebungshöhe H auf. Vorteilhaft weisen die Erhebungen mit einem rechteckigen Querschnitt eine Ergebungshöhe H1 und die Erhebungen mit dem dreieckigen Querschnitt eine Erhebungshöhe H2 auf, wobei gilt: H2 ≤ H1.

Das vorgeschlagene Sensorelement ermöglicht bei entsprechender Ansteuerung und Auswertung der Elektrodenschichten ES1 und ES2 sowohl ein resistives als auch ein kapazitives Erfassen taktiler Eingaben in das Sensorelement. Abhängig von der konkreten Ausführung der sich in Richtung R0 abwechselnden Teilbereiche der Elektrodenschicht ES1 und ES2, der konkreten Ausführung der Abstandshalterschicht, sowie der konkreten Ausführung der Messschicht kann das Sensorelement auf eine Vielzahl von Anforderungen und Aufgaben angepasst werden. Das Sensorelement kann je nach Wahl der Materialien M1 bis M5 mit unterschiedlich elastischen Eigenschaften hergestellt werden.

Ein zweiter Aspekt der Erfindung betrifft einen taktilen Sensor mit einem Sensorelement wie vorstehend beschrieben sowie einem Ansteuerungs- und Auswertemodul, das mit der Elektrodenschicht ES1 und der Elektrodenschicht ES2 elektrisch verbunden ist.

Das Ansteuerungs- und Auswertemodul dient einerseits als Spannungs- oder Stromquelle für die Elektrodenschichten ES1 und ES2. Werden die Elektrodenschichten ES1 und ES2 lokal (an den jeweiligen aufeinanderfolgenden Teilbereichen) bspw. durch die niedergedrückte Messschicht elektrisch miteinander verbunden, so wird dies vom Ansteuerungs- und Auswertemodul entsprechend erfasst und vorteilhaft als Signal für eine Weiterverarbeitung bereitgestellt.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- **Fig. 1**: eine schematisierte Darstellung eines erfindungsgemäßen taktilen Sensorelements 100 mit seiner Schichtzusammensetzung 101, 102a, 102b, 103, 104, 105,
- **Fig. 2**: verschiedene Ausführungsformen der Abstandshalterschicht 103,
- **Fig. 3a,b**: schematisierte Darstellungen eines Querschnittes (senkrecht zur R0-Richtung) durch ein erfindungsgemäßes Sensorelement 100, bei dem die Messeschicht 104 auf der Unterseite eine Strukturierung aufweist, in einen entspannten Zustand (Fig. 3a) und in einem Zustand bei dem von eine Kraft auf das Sensorelement ausgeübt wird (Fig. 3b),
- **Fig. 4a,b**: schematisierte Darstellungen eines Längsschnittes (in RO-Richtung) durch das Sensorelement von Fig 3a,b in einen entspannten Zustand (Fig. 4a) und in einem Zustand bei dem von eine Kraft auf das Sensorelement ausgeübt wird (Fig. 4b),
- **Fig. 5a,b**: schematisierte Darstellungen eines Querschnittes (senkrecht zur R0-Richtung) durch ein erfindungsgemäßes Sensorelement 100, bei dem die Messeschicht 104 auf der Unterseite keine Strukturierung aufweist, in einen entspannten Zustand (Fig. 5a) und in einem Zustand bei dem von eine Kraft auf das Sensorelement ausgeübt wird (Fig. 5b),
- **Fig. 6a,b**: schematisierte Darstellungen eines Längsschnittes (in RO-Richtung) durch das Sensorelement von Fig 5a,b in einen entspannten Zustand (Fig. 6a) und in einem Zustand bei dem von eine Kraft auf das Sensorelement ausgeübt wird (Fig. 6b), und
- **Fig. 7**: zeigt einen taktilen Sensor mit einem Sensorelement 100 und mit einem Ansteuerungs- und Auswertemodul 106, das mit der Elektrodenschicht ES1 102a und der Elektrodenschicht ES2 102b elektrisch verbunden ist.

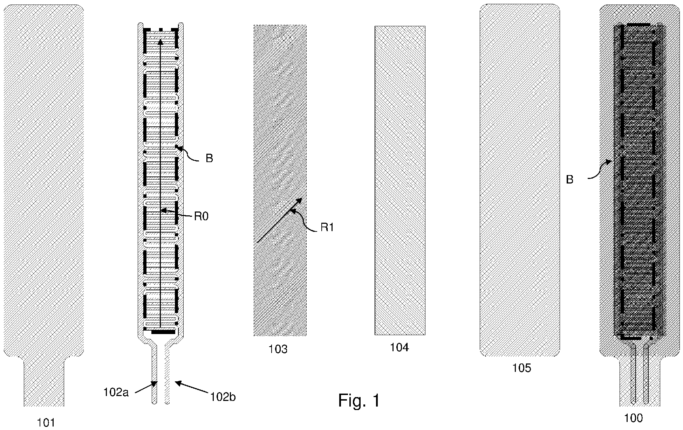

**Fig. 1** zeigt eine schematisierte Darstellung eines erfindungsgemäßen taktilen Sensorelements 100. Ebenfalls schematisierte dargestellt sind die einzelnen Schichten des Sensorelements 100. Das Sensorelement 100 umfasst in diesem Ausführungsbeispiel eine Substratschicht 101 aus dem elektrisch nichtleitenden Material M1: Polyethylenterephthalat PET, eine auf einer Oberseite der Substratschicht 101 aufgebrachte erste Elektrodenschicht ES1 102a und eine auf die Oberseite der Substratschicht 101 aufgebrachte zweite Elektrodenschicht ES2 102b, wobei die erste und die zweite Elektrodenschicht ES1, ES2 aus dem elektrisch leitenden Material M2: Silber Ag bestehen, auf der Oberseite lateral voneinander beabstandet angeordnet sind und jeweils eine 2D-Form aufweisen, die derart gestaltet ist, dass sich Teilbereiche der Elektrodenschicht ES1 und Teilbereiche der Elektrodenschicht ES2 zumindest in einem Bereich B an der Oberseite entlang einer Richtung R0 aufeinanderfolgend mehrfach abwechseln. Die Teilbereiche der Elektrodenschichten ES1 und ES2 sind vorliegend kammartig ausgebildet, wobei die Zinken des Kammes in die jeweiligen Lücken zwischen den Zinken ineinandergreifen. Die Teilbereiche der Elektrodenschichten ES1 und ES2 weißen in dem Bereich B einen konstanten Abstand voneinander auf.

Das Sensorelement 100 umfasst weiterhin eine auf die Substratschicht 101 mit den darauf aufgebrachten Elektrodenschichten ES1 und ES2 aufgebrachte Abstandshalterschicht 103, wobei die Abstandshalterschicht 103 in dem Bereich B vorliegend aus einzelnen, parallel in einer Richtung R1 verlaufenden, jeweils voneinander beabstandeten geraden Strängen ST aus einem elektrisch nichtleitenden dielektrischen Material M3. Di Richtung R0 und R1 schließen vorliegend einen Winkel von 45° ein.

Das Sensorelement 100 umfasst weiterhin eine auf die Abstandshalterschicht 103 flächig geschlossen aufgebrachte Messschicht 104 aus einem elektrisch leitenden, elastischen und dehnbaren Material M4. Die Messschicht 104 weist auf ihrer der Abstandhalterschicht 103 zugewandten Seite eine Oberflächenstrukturierung auf. Vorliegend weist die Oberflächenstrukturierung parallel angeordnete gerade verlaufende Erhebungen auf, wobei die nebeneinander angeordnete Erhebungen abwechselnd einen rechteckigen und einen dreieckigen Querschnitt aufweisen.

Das Sensorelement 100 weist schließlich eine auf die Messschicht 104 aufgebrachte Schutzschicht 105 auf.

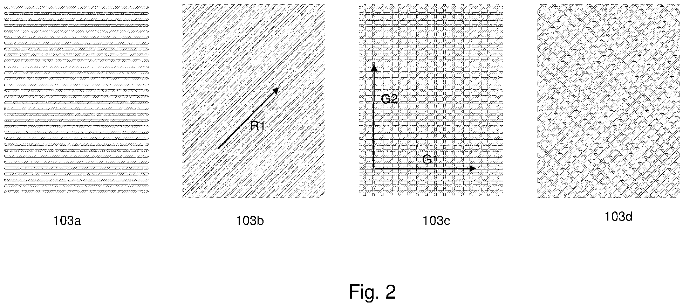

**Fig. 2** zeigt verschiedene Ausführungsformen der Abstandshalterschicht 103. Die Abstandshalterschicht 103a ist durch waagrecht verlaufende Stränge ST, die Abstandshalterschicht 103b ist durch im 45° Winkel verlaufende Stränge ST, die Abstandshalterschicht 103c ist durch ein rechtwinkliges Gitter mit den Gitterachsen G1, G2 und die Abstandshalterschicht 103d ist durch eine Verdrehung des Gitters von 103c um 45° gekennzeichnet, jeweils orientiert an einer Waagrechten des dargestellten Bildblattes.

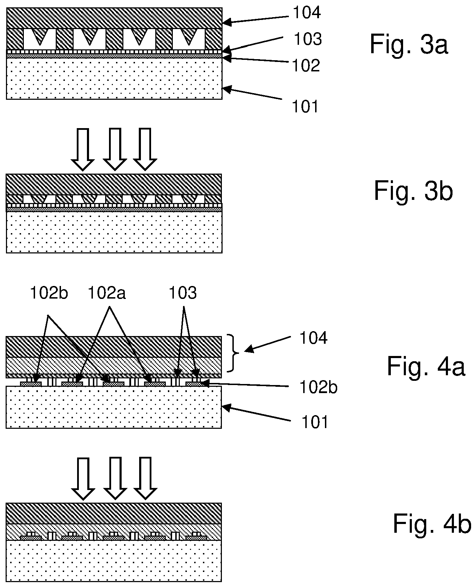

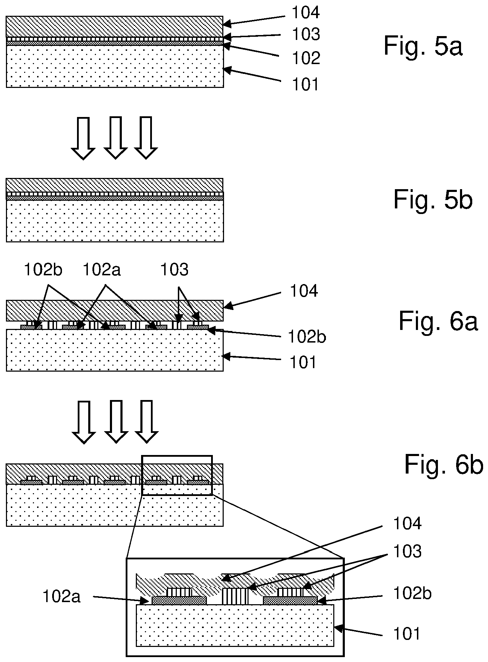

Der einfacheren Darstellung wegen ist in den Figuren 3a,b bis 6a,b die Schutzschicht 105 weggelassen.

**Fig. 3a****b** zeigen schematisierte Darstellungen eines Querschnittes (senkrecht zur R0-Richtung) durch ein erfindungsgemäßes Sensorelement 100, bei dem die Messschicht 104 auf der Unterseite eine Strukturierung aufweist, in einem entspannten Zustand (Fig. 3a) und in einem Zustand bei dem von oben eine Kraft (angedeutet durch die senkrechten nach unten weisenden Pfeile) auf das Sensorelement 100 ausgeübt wird (Fig. 3b).

**Fig. 4a**,**b** zeigen schematisierte Darstellungen eines Längsschnittes (in RO-Richtung) durch das Sensorelement von Fig 3a,b in einen entspannten Zustand (Fig. 4a) und in einem Zustand bei dem von eine Kraft auf das Sensorelement ausgeübt wird (Fig. 4b). Die elektrisch leitende Messschicht 104 wird dabei im Zustand von Fig. 4 auf die jeweils elektrisch leitenden Teilbereiche der Elektrodenschichten ES1 und ES2 gedrückt. Dies führt zu einer elektrischen Verbindung zwischen Teilbereichen der Elektrodenschicht ES1 und ES2, was durch eine entsprechendes Ansteuerung- und Auswerte Modul 106 erkannt werden kann. Durch entsprechende Auswertung können sowohl resistive als auch kapazitive Veränderungen von Parametern erfasst werden (Änderungen kapazitiver Parameter bereits bei Annäherung von Objekten an das Sensorelement, Änderung en resistiver Parameter bei elektrischer Kontaktierung von Teilbereichen der Elektrodenschichten ES1 und ES2). Die Messchicht 104 ist vorteilhaft flächig geschlossen aufgetragen.

**Fig. 5a**,**b** zeigen schematisierte Darstellungen eines Querschnittes (senkrecht zur R0-Richtung) durch ein erfindungsgemäßes Sensorelement 100, bei dem die Messeschicht 104 auf der Unterseite keine Strukturierung aufweist, in einen entspannten Zustand (Fig. 5a) und in einem Zustand bei dem von eine Kraft auf das Sensorelement ausgeübt wird (Fig. 5b).

**Fig. 6a**,**b** zeigen schematisierte Darstellungen eines Längsschnittes (in RO-Richtung) durch das Sensorelement von Fig 5a,b in einen entspannten Zustand (Fig. 6a) und in einem Zustand bei dem von eine Kraft auf das Sensorelement ausgeübt wird (Fig. 6b).

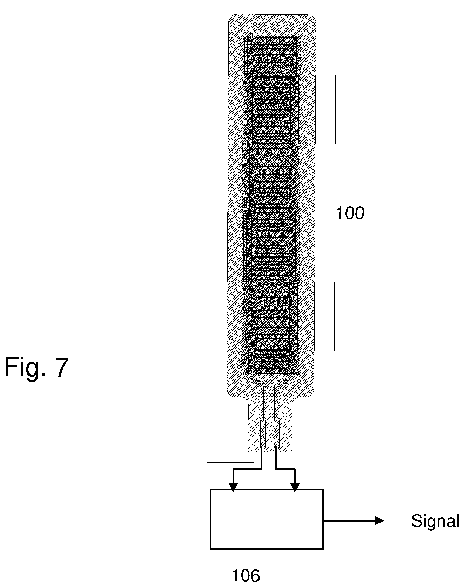

**Fig. 7** zeigt einen taktilen Sensor mit einem Sensorelement 100 und mit einem Ansteuerungs- und Auswertemodul 106, das mit der Elektrodenschicht ES1 102a und der Elektrodenschicht ES2 102b elektrisch verbunden ist. Sofern das Sensorelement eine taktile Eingabe erfasst, erzeugt das Ansteuerung- und Auswerte Modul 106 ein entsprechendes Signal, dass für eine weitergehende Verarbeitung bereitgestellt wird.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa einer weitergehenden Erläuterung in der Beschreibung, definiert wird.

### Bezugszeichenliste

- 100: Sensorelement
- 101: Substratschicht
- 102a: Elektrodenschichten ES1
- 102b: Elektrodenschichten ES2
- 103: Abstandshalterschicht
- 104: Messschicht
- 105: Schutzschicht

## Patentansprüche

1. Taktiles Sensorelement (100) aufweisend:
- eine Substratschicht (101) aus einem elektrisch nichtleitenden Material M1,
- eine auf einer Oberseite der Substratschicht (101) aufgebrachte erste Elektrodenschicht ES1 (102a) und eine auf die Oberseite der Substratschicht (101) aufgebrachte zweite Elektrodenschicht ES2 (102b), wobei die erste und die zweite Elektrodenschicht ES1, ES2 aus einem elektrisch leitenden Material M2 bestehen, auf der Oberseite lateral voneinander beabstandet angeordnet sind und jeweils eine 2D-Form aufweisen, die derart gestaltet ist, dass sich Teilbereiche der Elektrodenschicht ES1 und Teilbereiche der Elektrodenschicht ES2 zumindest in einem Bereich B an der Oberseite entlang einer Richtung R0 aufeinanderfolgend mehrfach abwechseln,
- eine auf die Substratschicht (101) und auf die darauf aufgebrachten Elektrodenschichten ES1 und ES2 aufgebrachte Abstandshalterschicht (103), wobei die Abstandshalterschicht (103) zumindest in dem Bereich B aus einzelnen in einer Richtung R1 verlaufenden, jeweils voneinander beabstandeten Strängen ST aus einem im Wesentlichen elektrisch nichtleitenden Material M3 besteht, wobei die Richtung R1 und die Richtung R0 einen Winkel α aus dem Winkelbereich [30° - 60°] einschließen oder die Richtung R1 und die Richtung R0 einen Winkel α = 45° einschließen, oder die Abstandshalterschicht (103) zumindest in dem Bereich B aus einem Lochgitter aus einem im Wesentlichen elektrisch nichtleitenden Material M3 mit parallel zur Oberseite verlaufenden Gitterachsen G1, G2 besteht, wobei die Richtung R0 und eine der Gitterachsen G1, G2 einen Winkel α aus dem Winkelbereich [30° - 60°] einschließen oder die Richtung R0 und eine der Gitterachsen G1, G2 einen Winkel α = 45 ° einschließen, und
- eine auf die Abstandshalterschicht (103) aufgebrachte Messschicht (104) aus einem elektrisch leitenden, elastischen und dehnbaren Material M4.

2. Sensorelement (100) nach Anspruch 1,
bei dem die sich im Bereich B entlang der Richtung R0 abwechselnden Teilbereiche der Elektrodenschichten ES1 und ES2 jeweils als Fortsätze bspw. als balkenartige Fortsätze oder zackenartige Fortsätze ausgebildet sind, wobei die Fortsätze der Elektrodenschichten ES1 und ES2 kammartig ineinandergreifen.

3. Sensorelement (100) nach einem der Ansprüche 1 oder 2,
bei dem die in Richtung R0 aufeinanderfolgend angeordneten Teilbereiche der Elektrodenschichten ES1 und ES2 jeweils einen Abstand aus dem Bereich [0.01 mm, 5.0 mm] voneinander aufweisen.

4. Sensorelement (100) nach einem der Ansprüche 1 bis 3,
bei dem die in Richtung R0 aufeinanderfolgend angeordneten Teilbereiche der Elektrodenschichten ES1 und ES2 jeweils eine Längserstreckung in RO-Richtung aus dem Bereich [0.01 mm, 5.0 mm] aufweisen.

5. Sensorelement (100) nach einem der Ansprüche 1 bis 4,
bei dem die Abstandhalterschicht (103) und die Messschicht (104) derart ausgeführt und eingerichtet sind, dass bei Aufbringen einer Kraft auf die Messschicht (104), die Messschicht (104) durch elastische Verformung die zwischen den Strängen ST verlaufenden oder unterhalb der Löcher des Lochgitters verlaufenden Teilbereiche der Elektrodenschichten ES1 und ES2 elektrisch kontaktiert.

6. Sensorelement (100) nach einem der Ansprüche 1 bis 5,
bei dem die Messschicht (104) auf ihrer der Abstandhalterschicht (103) zugewandten Seite eine Oberflächenstrukturierung aufweist.

7. Sensorelement (100) nach Anspruch 6,
bei dem die Oberflächenstrukturierung parallel angeordnete gerade verlaufende Erhebungen aufweist.

8. Sensorelement (100) nach Anspruch 7,
bei dem die nebeneinander angeordnete Erhebungen abwechselnd einen rechteckigen und einen dreieckigen Querschnitt aufweisen.

9. Sensorelement (100) nach Anspruch 7 oder 8,
bei dem nebeneinander angeordnete Erhebungen jeweils eine unterschiedliche Erhebungshöhe H aufweisen, wobei die Erhebungen mit einem rechteckigen Querschnitt eine Ergebungshöhe H1 und die Erhebungen mit dem dreieckigen Querschnitt eine Erhebungshöhe H2 aufweisen, wobei gilt: H2 ≤ H1.

10. Taktiler Sensor mit einem Sensorelement (100) nach einem der Ansprüche 1 bis 9 und mit einem Ansteuerungs- und Auswertemodul (106), das mit der Elektrodenschicht ES1 (102a) und der Elektrodenschicht ES2 (102b) elektrisch verbunden ist.

## Claims

1. Tactile sensor element (100) having:
- a substrate layer (101) made of an electrically non-conductive material M1,
- a first electrode layer ES1 (102a) applied to an upper side of the substrate layer (101), and a second electrode layer ES2 (102b) applied to the upper side of the substrate layer (101), wherein the first and the second electrode layers ES1, ES2 are made from an electrically conductive material M2, are arranged laterally at a distance from one another on the upper side, and each have a 2D shape which is designed in such manner that partial areas of the electrode layer ES1 and partial areas of the electrode layer ES2 alternate several times successively along a direction R0, at least in an area B on the upper side,
- a spacer layer (103) applied to the substrate layer (101) and to the electrode layers ES1 and ES2 applied thereon, wherein at least in the area B the spacer layer (103) consists of individual strands ST made from a substantially electrically non-conductive material M3, extending in a direction R1 and each spaced apart from each other, wherein direction R1 and direction R0 enclose an angle α from the angular range [30°-60°] or direction R1 and direction R0 enclose an angle α = 45°, or at least in the area B the spacer layer (103) consists of a perforated grid made from a substantially electrically non-conductive material M3 with grid axes G1, G2 running parallel to the upper side, wherein direction R0 and one of the grid axes G1, G2 enclose an angle α from the angular range [30°-60°] or direction R0 and one of the grid axes G1, G2 enclose an angle α = 45°, and
- a measuring layer (104) applied to the spacer layer (103) and made of an electrically conductive, elastic and stretchable material M4.

2. Sensor element (100) according to Claim 1,
in which the partial areas of the electrode layers ES1 and ES2 alternating in area B along the direction R0 are each designed as extensions, for example as bar-like extensions or prong-like extensions, wherein the extensions of the electrode layers ES1 and ES2 intermeshing in a comb-like manner.

3. Sensor element (100) according to one of Claims 1 or 2,
in which the partial areas of the electrode layers ES1 and ES2 arranged successively in the direction R0 each have a distance from one another from the range [0.01 mm, 5.0 mm].

4. Sensor element (100) according to any one of Claims 1 to 3,
in which the partial areas of the electrode layers ES1 and ES2 arranged successively in the direction R0 each have a longitudinal extension in the R0 direction from the range [0.01 mm, 5.0 mm].

5. Sensor element (100) according to any one of claims 1 to 4,
in which the spacer layer (103) and the measuring layer (104) are designed and aligned in such a way that when a force is applied to the measuring layer (104) the measuring layer (104) is elastically deformed and makes electrical contact with the partial areas of the electrode layers ES1 and ES2 extending between the strands ST or extending below the holes in the perforated grid.

6. Sensor element (100) according to any one of Claims 1 to 5,
in which the measuring layer (104) has a surface structuring on the side thereof facing the spacer layer (103).

7. Sensor element (100) according to Claim 6,
in which the surface structuring has straight elevations arranged in parallel.

8. Sensor element (100) according to Claim 7,
in which the elevations arranged adjacent to one another have a rectangular and a triangular cross section alternatingly.

9. Sensor element (100) according to Claim 7 or 8,
in which elevations arranged adjacent to one another each have a different elevation height H, the elevations with a rectangular cross section having an elevation height H1 and the elevations with the triangular cross section having an elevation height H2, wherein H2 ≤ H1.

10. Tactile sensor with a sensor element (100) according to any one of Claims 1 to 9 and with a control and evaluation module (106) which is electrically connected to the electrode layer ES1 (102a) and the electrode layer ES2 (102b).

## Revendications

1. Elément de capteur tactile (100) comprenant :
- une première couche de substrat (101) constituée d'un matériau électriquement non conducteur M1,
- une première couche d'électrode ES1 (102a) appliquée sur le côté supérieur de la couche de substrat (101) et une deuxième couche d'électrode ES2 (102b) appliquée sur le côté supérieur de la couche de substrat (101), dans lequel les première et deuxième couches d'électrode ES1, ES2 sont constituées d'un matériau électriquement conducteur M2, sont disposées latéralement espacées les unes des autres sur le dessus et présentent chacune une forme 2D, qui est conçue de telle sorte que des zones partielles de la couche d'électrode ES1 et des zones partielles de la couche d'électrode ES2 alternent plusieurs fois, au moins dans une zone B sur le dessus le long d'une direction R0,
- une couche d'espacement (103) appliquée sur la couche de substrat (101) et sur les couches d'électrodes ES1 et Es2 appliquées sur celle-ci, dans lequel la couche d'espacement (103) est constituée au moins dans la zone B de brins individuels ST s'étendant dans une direction R1 et chacune espacée l'une de l'autre et constituée d'un matériau M3 sensiblement non conducteur de l'électricité, dans lequel la direction R1 et la direction R0 définissent un angle α compris dans la plage angulaire [30°-60°] ou la direction R1 et la direction R0 définissent un angle α = 45°, ou la couche d'espacement (103) au moins dans la zone B est constituée d'une grille perforée en un matériau sensiblement électriquement non conducteur M3 avec des axes de grille G1, G2 s'étendant parallèlement au sommet, dans lequel la direction R0 et un des axes de grille G1, G2 définissent un angle α par rapport à la plage angulaire [30°-60°] ou la direction R0 et un des axes de grille G1, G2 définissent un angle α = 45°, et
- une couche de mesure (104) appliquée sur la couche d'espacement (103) constituée d'un matériau électriquement conducteur, élastique et extensible M4.

2. Elément de capteur (100) selon la revendication 1,
dans lequel les zones partielles des couches d'électrodes ES1 et ES2 qui alternent dans la zone B le long de la direction R0 sont chacune conçues comme des extensions, par exemple des extensions en forme de barre ou des extensions dentelées, dans lequel les extensions des couches d'électrodes ES1 et ES2 s'emboîtent comme un peigne.

3. Elément de capteur (100) selon une des revendications 1 ou 2,
dans lequel les zones partielles des couches d'électrodes ES1 et ES2 disposées successivement dans la direction R0 ont chacune une distance l'une de l'autre dans la plage [0,01 mm, 5,0 mm].

4. Elément de capteur (100) selon une des revendications 1 à 3,
dans lequel les sous-régions des couches d'électrodes ES1 et ES2 disposées successivement dans la direction R0 présentent chacune une extension longitudinale dans la direction R0 comprise dans la plage [0,01 mm, 5,0 mm] .

5. Elément de capteur (100) selon une des revendications 1 à 4,
dans lequel la couche d'espacement (103) et la couche de mesure (104) sont conçues et configurées de telle sorte que lorsqu'une force est appliquée sur la couche de mesure (104), la couche de mesure (104), par déformation élastique, les zones partielles des couches d'électrodes ES1 et ES2 qui s'étendent entre les brins ST ou s'étendent sous les trous de la grille perforée sont mises en contact électrique.

6. Elément de capteur (100) selon une des revendications 1 à 5,
dans lequel la couche de mesure (104) présente une surface structurante sur sa face tournée vers la couche d'espacement (103).

7. Elément de capteur (100) selon la revendication 6,
dans lequel la structuration de la surface présente des élévations disposée parallèlement et s'étendant en ligne droite.

8. Elément de capteur (100) selon la revendication 7,
dans lequel les élévations disposées les unes à côté des autres présentent alternativement une section transversale rectangulaire et triangulaire.

9. Elément de capteur (100) selon la revendication 7 ou 8,
dans lequel les élévations disposées les unes à côté des autres présentent chacune une hauteur d'élévation H différente, dans lequel les élévations présentent une hauteur d'élévation H1 avec une coupe transversale rectangulaire de la hauteur et les élévations avec la section transversale triangulaire présentent une hauteur d'élévation H2, d'où : H2 ≤ H1.

10. Capteur tactile comportant un élément de capteur (100) selon une des revendications 1 à 9 et comportant un module de commande et d'évaluation (106), qui est connecté électriquement à la couche d'électrode ES1 (102a) et la couche d'électrode ES2 (102b).
